# EUROPEAN PATENT APPLICATION

(11) **EP 4 303 124 A1**
(43) Date of publication of application: **10.01.2024**
(21) Application number: 22183510.1
(22) Date of filing: 07.07.2022
(51) Int. Cl.: B64C 29/00, B64D 27/24, F02K 1/82, F02K 3/06, F02K 5/00

(54) **ELECTRICALLY DRIVEN FAN ENGINE COMPRISING GUIDE VANES PROVIDED WITH ACOUSTIC LINERS**

(71) Applicant: Lilium eAircraft GmbH, 82234 Wessling (DE)
(72) Inventor: FAROOQUI, Maaz, 82234 Wessling (DE); BENT, Paul, 82234 Wessling (DE)
(74) Representative: Weickmann & Weickmann PartmbB

(57) **Abstract**

The present invention relates to an electrically driven fan engine (10), comprising a rotor (24) with a multitude of rotor blades (26), which is arranged to be driven in rotation by means of an electrical motor; and a stator assembly (12) with a multitude of guide vanes (14) extending from a radially central region, which is fixedly arranged downstream of the rotor (24) with respect to a longitudinal axis (L) of the engine (10), wherein at least one of the guide vanes (14) of the stator assembly (12) is provided with acoustic liners (100).

## Description

The present invention relates to an electrically driven fan engine, comprising a rotor with a multitude of rotor blades, which is arranged to be driven in rotation by means of an electrical motor, and a stator assembly with a multitude of guide vanes extending from a radially central region, which is fixedly arranged downstream of the rotor with respect to a longitudinal axis of the engine.

When designing an electrically driven fan engine for an aircraft, it has to be decided on the best possible reduction of operating noise emitted by the engine in order to minimize the ground radiations caused by operation of the aircraft provided with the respective engine. For example, the current noise regulations limit the total number of flights that an aircraft can make through a given airport by restricting the integrated noise emissions in the given time of operation. More silent aircraft hence have the benefits of being able to perform more flight operations and thus generate more revenue.

Since noise emission is logarithmic in nature, an aircraft with 3 dB less noise emitted compared to a baseline aircraft can make twice as many flights compared to the latter, while a 10 dB reduction of noise would allow for ten times as many flights and a 20 dB reduction to even a 100 times more flights. It is thus obvious that the potential economic advantages of reducing noise emitted by such engines can be substantial, while of course the overall acceptance of such aircraft by people living near airports can also be vital in establishing respective services.

While the present invention is in principle applicable to any kind of electrically driven fan engine including open propellers, its beneficial properties can be especially pronounced in ducted fan engines, in which the rotor rotates inside a housing with a substantially cylindrical inner space. However, providing such electrically driven ducted fan engines with a large amount of acoustic lining comes at the penalty of aerodynamic drag and increased mass due to the increase in diameter and material, both of which limit the range and efficiency of the aircraft, while there may also arise icing and heating issues in the engine. Thus, finding an optimal compromise between best possible noise reduction and the above-mentioned disadvantageous effects is a challenging task.

In conventional aircraft with jet engines, most emphasis is put on providing acoustic lining at the respective intakes in order to reduce the dominant sources of noise in the form of fan buzz saw noise, which arises when the tips of the early compressor stages exceed velocities of Mach 1. However, since in electrically driven ducted fan engines, the rotor can be driven at very high frequencies while still keeping the tip speed of the rotor sub-sonic due to the usually smaller diameters of such engines, other sources of noise become dominant or at least equally important as fan noise. Furthermore, the thermal profiles of jet engines and electrically driven engines are substantially different, such that also for these reasons, strategies for noise reduction of jet engines might not be the optimal choices for electrically driven ducted fan engines.

Also, in case of combining electrical propulsion with vertical takeoff and landing capabilities in aircraft, which may in particular comprise tiltable engines, due to the directivity of the engines in their starting and landing phases, which intrinsically directs more noise to the ground, special emphasis has to be put on noise reduction downstream of the engine as compared to conventional aircraft, in which the orientation of the engines basically remains horizontal at all times.

Another aspect that has to be taken into account is that in particular in distributed propulsion system with a plurality of electrically driven ducted fan engines in a single aircraft, the fans are driven at higher rpm in a small diameter duct, which causes higher order modes of noise to appear in the noise pressure field from aerodynamic as well as other mechanical parts.

It is therefore an object of the present invention to provide an electrically driven fan engine of the above-mentioned type, in which an optimum compromise is found between noise reduction and the avoidance of disadvantageous effects of employing a large amount of acoustic lining, such as additional aerodynamic drag and increased weight.

For this purpose and in order to solve the above-identified problem, in the electrically driven fan engine according to the present invention, at least one of the guide vanes of the stator assembly is provided with acoustic liners, wherein the side surfaces of the at least one guide vane, whose normal vector points are essentially transverse to the airflow direction, are formed at least partially by the acoustic liners. Thus, an area of the engine not typically used for acoustic liners is exploited, which provides a solution requiring less space and weight compared to the classical application of acoustic liners, leading to improved noise attenuation per unit volume and an overall superior performance.

Since the guide vanes of the stator assembly are positioned downstream of the rotor, the above-mentioned beneficial effect of reducing noise downstream of the actual moving parts of the ducted fan engine is established as well. Thus, through superior acoustic absorption performance and compliance with certain aviation certification requirements, the inventive acoustic liner concept will allow for greater flexibility, performance improvement as well as reduced costs and weight in the design of aircraft propulsion systems, while satisfying community noise requirements. Another aspect that has to be considered in this context is that noise is also reduced when the surface roughness of the stator is manipulated as the stator actually acts as one of the sources of noise in particular in ducted fans, while even in open rotors there could be cases in which a stator is at least a secondary source of noise as well. In such cases, acoustically lining the stator for example by putting perforations on this stator would dampen the radiation of noise.

As already mentioned above, the present invention may in particular relate to an electrically driven ducted fan engine, which further comprises a housing with an inner wall defining a substantially cylindrical inner space extending along the longitudinal axis, an inlet opening provided in the housing, and an exhaust opening provided in the housing downstream of the stator assembly with respect to the longitudinal axis of the engine, wherein the rotor is positioned in the inner space of the housing downstream of the inlet opening with respect to the longitudinal axis of the engine.

In particular, all of the guide vanes of the stator assembly of the electrically driven fan engine according to the present invention may be provided with acoustic liners in a similar manner, such as to improve noise reduction performance and facilitate manufacture of the engine. While in this context, the actual number of guide vanes of the stator assembly may be chosen according to optimal engine thrust performance and efficiency, a typical configuration may for example comprise four substantially identical guide identical vanes in the stator assembly, all of which can be provided with acoustic liners in an identical manner.

While it is in principle conceivable to retrofit existing designs of guide vanes of stator assemblies of fan engines with acoustic liners on their outer surfaces, in a preferred embodiment of the present invention, the at least one guide vane provided with acoustic liners may be formed by a frame element defining its outline and a central aperture, wherein the acoustic liners are mounted in the central aperture. In such embodiments, the overall mass and drag caused by the stator assembly is reduced and as long as the frame element is constructed in such a manner that all forces and torques during operation of the engine can be absorbed, the central aperture may be chosen as large as possible in order to increase the volume available for providing acoustic liners therein.

Preferably, the acoustic liners used in electrically driven fan engines according to the present invention may comprise porous liner material and may in particular comprise Helmholtz liners. Helmholtz liner material consists of a cavity structure with many cavities, such as a regular internal structure, covered by perforated face sheet. Particularly, according to the present invention, the Helmholtz liners used for this purpose may be formed by a central structure and one perforated outer plate with a plurality of holes on each side of the central structure, thus forming a double-sided Helmholtz liner material. Herein, the air within the cavities represents a dampening medium, while the mass of air within the small holes of the perforated face sheets is oscillating due to acoustic excitation. Sound energy is thus absorbed by friction losses within the holes, compression and expansion of the cavity volume as well as shedding of vorticity from the edges of the holes.

In order to achieve the acoustic properties intended for the respective Helmholtz liners, the holes provided in the perforated outer plates may be arranged in a regular or random pattern, wherein preferably one of the outer plates is provided with a regular hole pattern, and the other outer plate is provided with a random hole pattern. Said random hole pattern may for example be defined by its hole density per unit area, while in the regular hole pattern, lines or arrays of holes may be formed in a regular manner.

In particular, the Helmholtz liners employed in the electrically driven fan engine according to the present invention may comprise a central structure formed in a honeycomb pattern, which is an optimal choice concerning both mechanical stiffness and rigidity as well as noise dampening properties.

In order to keep the mass and cross-section of the Helmholtz liners as low as possible, they may have a thickness of less than 5 mm.

Taking into account the fact that noise emissions of fan engines can be modeled or determined in experiments, it is possible to tune the acoustic liners to at least one wavelength, λ, which is expected to be dominant during operation of the engine and is preferably calculated depending on at least one of the number of rotor blades, the number of guide vanes and the number of poles of the electric motor driving the rotor. Herein, the Helmholtz liners may be tuned with respect to their thickness, porosity, blade thickness, hole diameter and/or hole density per unit area.

While the present invention mainly relates to employing acoustic liners in the guide vanes of a stator assembly of an electrically driven ducted fan engine, for further noise reduction therein, the inner housing wall may additionally be provided with acoustic liners at least along a section of its longitudinal extension.

Electrically driven ducted fan engines according to the present invention may typically have a diameter of about 28 to 38 cm and according to a second aspect of the present invention, an aircraft with a fuselage and at least one pair of wings is provided, which further comprises at least one electrically driven fan engine according to the present invention, wherein in particular the fan engine is pivotably mounted to one of the wings.

Further features and advantages of the present invention will become even clearer from the following description of an embodiment thereof, when taken together with accompanying drawings. These drawings in particular show:
- Fig. 1: an isometric view of a stator assembly of an electrically driven ducted fan engine according to the present invention before providing it with acoustic liners;
- Fig. 2: an electrically driven ducted fan engine according to the present invention in a side view;
- Fig. 3: the engine of Fig. 2 in an isometric view with its housing removed; and
- Fig. 4: a schematic top view of an aircraft provided with a plurality of engines as shown in Fig. 2 and 3.

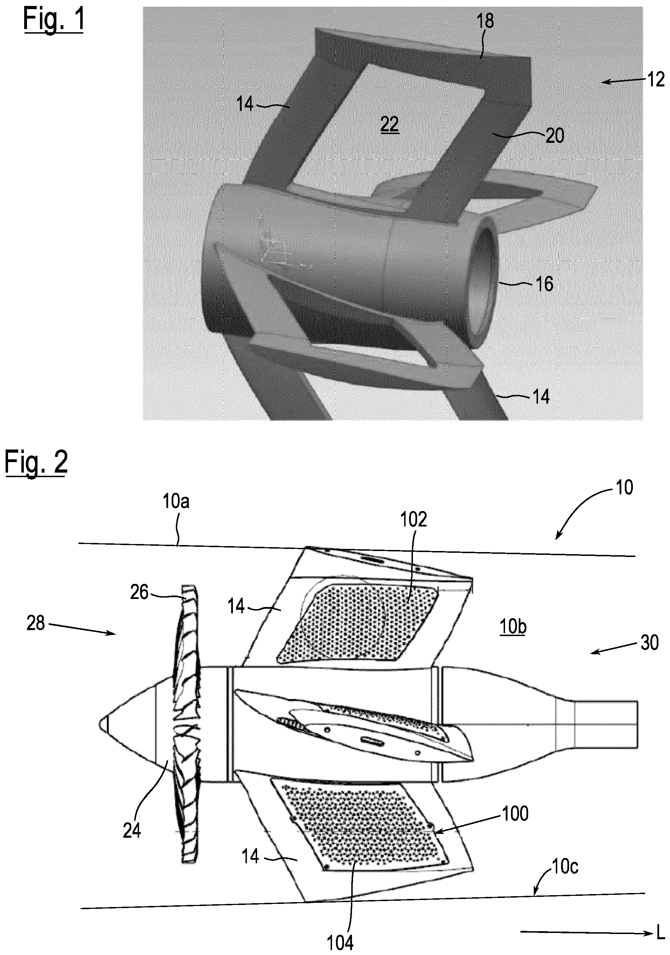

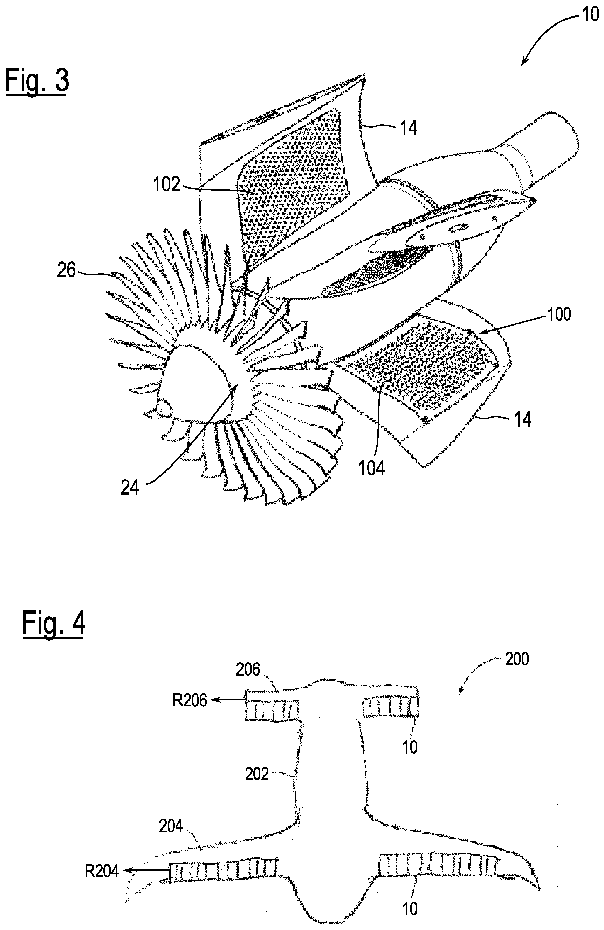

In Fig. 1, a stator assembly 12 of an electrically driven ducted fan engine 10 shown in Figs. 2 and 3 is first shown in isometric view. Said stator assembly 12 comprises a multitude of in total four guide vanes 14 extending from a radially central region 16 to an outer region 18, in which they would be aligned with an inner wall of a housing of the engine 10, which is not shown in Fig. 1.

Each of the guide vanes 14 is formed by a frame element 20 defining its outline and a central aperture 22, wherein the acoustic liners discussed in the following can be mounted in the central aperture 22 by suitable mounting means.

The stator assembly 12 shown in Fig. 1 forms part of an electrically driven ducted fan engine 10 shown in Figs. 2 and 3 in two different views. Said engine 10 also comprises a housing 10a, which is shown only schematically in Fig. 3 and omitted altogether in Fig. 3 for the sake of visibility of the remaining components. The guide vanes 14 of the stator assembly 12 extend between the centrally inner region of the inner space 10b defined by the housing 10a and the inner wall 10c of the housing 10a. During operation of the engine 10, the stator assembly 12 serves the purpose of directing the stream of accelerated air driven by rotor 24 with its multitude of rotor blades 26, such that the thrust produced by the engine 10 is substantially directed along the longitudinal direction L of the engine 10. For this purpose, an electric motor (not shown in the figures) mounted in the central part 16 of the stator assembly 12 drives the rotor 24 for a rotational movement thereof.

Said driven air thus flows from an inlet opening 28 of the housing 10a to an exhaust opening 30 of the housing 10a downstream of the stator assembly with respect to the longitudinal axis L of the engine 10 in order to propel the respective aircraft forward.

According to the present invention, the apertures 22 provided in the guide vanes 14 of the stator assembly 12 are filled out with acoustic liners 100 in the form of double-sided Helmholtz liners. Such Helmholtz liners are formed by a central honeycomb structure as well as one perforated outer plate 102, 104 on each side of the central structure, wherein the central structure is not visible in Figs. 2 and 3. It shall be pointed out that the perforation of the first outer plate 102 of each guide vane 14 is provided with a regular hole pattern, in which the holes are arranged along regularly spaced lines, while the other outer plate 104 is provided with a random hole pattern, in which only the average density of holes per unit area is fixed.

It is obvious from Figs. 2 and 3 that the acoustic liners 100 fit in the physical volume and space available in the guide vanes 14 and they provided for a reduction of operating noise downstream of the rotor 24 and in direction of the exhaust opening 30 of the engine 10. It shall at this point be pointed out, that additionally the inner housing wall 10c of the engine 10 may also be provided with acoustic liners at least along a section if its longitudinal extension.

The Helmholtz liners used in the engine 10 according to the present invention may be tuned according to the acoustic properties of the engine 10 in its operation and a substantial reduction of noise emitted can be achieved, in particular with respect to the ground, especially when taking into account the tiltable connection of the engine 10 to the corresponding wing 204 or canard 206 of the aircraft 200 as discussed below.

Said aircraft 200 is shown in Fig. 4 in a schematic manner and it comprises a fuselage 202, a pair of wings 204 and a pair of canards 206 positioned in front of the wings 206 with respect to the main flying direction of the aircraft 200. To each of the wings 204 and canards 206, a plurality of engines 10 as shown in Fig. 2 and 3 are mounted in a tiltable manner by means of respective connection sections, such that the engines are tiltable with respect to axes with substantially extend along the longitudinal directions L204 and L206 of the wings 204 and canards 206, respectively. By employing suitable strategies for tilting the engines 10 with respect to their respective wing 204 or canard 206, the aircraft 200 is capable of vertical take-off and landing.

## Claims

1. Electrically driven fan engine (10), comprising:
- a rotor (24) with a multitude of rotor blades (26), which is arranged to be driven in rotation by means of an electrical motor; and
- a stator assembly (12) with a multitude of guide vanes (14) extending from a radially central region, which is fixedly arranged downstream of the rotor (24) with respect to a longitudinal axis (L) of the engine (10);
wherein at least one of the guide vanes (14) of the stator assembly (12) is provided with acoustic liners (100),
wherein the side surfaces of the at least one guide vane (14), whose normal vector points are essentially transverse to the airflow direction, are formed at least partially by the acoustic liners (100).

2. Electrically driven fan engine (10) according to claim 1,
further comprising:
- a housing (10a) with an inner housing wall (10c), defining a substantially cylindrical inner space (10b) extending along the longitudinal axis (L);
- an inlet opening (28) provided in the housing (10a); and
- an exhaust opening (30) provided in the housing (10a) downstream of the stator assembly (12) with respect to the longitudinal axis (L) of the engine (10);
wherein the rotor (24) is positioned in the inner space (10b) of the housing (10a) downstream of the inlet opening (28) with respect to the longitudinal axis (L) of the engine (10).

3. Electrically driven fan engine (10) according to claim 1 or claim 2,
wherein all of the guide vanes (14) of the stator assembly (12) are provided with acoustic liners (100) in a similar manner.

4. Electrically driven fan engine (10) according to any of the preceding claims,
wherein the at least one guide vane (14) provided with acoustic liners (100) is formed by a frame element (20) defining its outline and a central aperture (22), wherein the acoustic liners (100) are mounted in the central aperture (22).

5. Electrically driven fan engine (10) according to any of the preceding claims,
wherein the acoustic liners (100) comprise porous liner material.

6. Electrically driven fan engine (10) according to claim 5,
wherein the acoustic liners (100) comprise Helmholtz liners.

7. Electrically driven fan engine (10) according to claims 4 and 6,
wherein the Helmholtz liners are formed by a central structure and one perforated outer plate (102, 104) with a plurality of holes on each side of the central structure.

8. Electrically driven fan engine (10) according to claim 7,
wherein the holes are arranged in a regular or random pattern, wherein preferably one of the outer plates (102) is provided with a regular hole pattern and the other outer plate (104) is provided with a random hole pattern.

9. Electrically driven fan engine (10) according to any of claims 6 to 8,
wherein the Helmholtz liners comprise a central structure formed in a honeycomb pattern.

10. Electrically driven fan engine (10) according to any of claims 6 to 9,
wherein the Helmholtz liners have thickness of less than 5 mm.

11. Electrically driven fan engine (10) according to any of the preceding claims,
wherein the acoustic liners (100) are tuned to at least one wavelength, λ, which is preferably calculated depending on at least one of the number of rotor blades, the number of guide vanes (14) and a number of poles of the electric motor driving the rotor (24).

12. Electrically driven fan engine (10) according to claim 11 and any of claims 6 to 10,
wherein the Helmholtz liners are tuned with respect to their thickness, porosity, plate thickness, hole diameter and/or hole density.

13. Electrically driven fan engine (10) according to any of claims 2 to 12,
wherein additionally the inner housing wall (10c) is provided with acoustic liners at least along a section if its longitudinal extension.

14. Electrically driven fan engine (10) according to any of claims 2 to 13,
wherein the engine (10) has a diameter of 28 to 38 cm.

15. Aircraft (200) with a fuselage (202) and at least one pair of wings (204, 206), further provided with at least one electrically driven ducted fan engine (10) according to any of the preceding claims, wherein in particular the ducted fan engine (10) is pivotably mounted to one of the wings (204, 206).
